# EUROPÄISCHE PATENTSCHRIFT

(11) **EP 0 979 627 B1**
(45) Veröffentlichungstag und Bekanntmachung des Hinweises auf die Patenterteilung: **23.07.2003**
(21) Anmeldenummer: 99115935.1
(22) Anmeldetag: 12.08.1999
(51) Int. Cl.: A47B 79/00, A47B 43/00

(54) **Zusammenlegbares Sanitätsnachtschränkchen**
Foldable medical bedside table
Table de nuit médicale pliable

(30) Priorität: 12.08.1998 DE 19836437
(43) Veröffentlichungstag der Anmeldung: 16.02.2000
(73) Patentinhaber: Dontenvill, Christian, 89081 Ulm (DE)
(72) Erfinder: Dontenvill, Christian, 89081 Ulm (DE)
(74) Vertreter: Patentanwälte Westphal, Mussgnug & Partner

(56) Entgegenhaltungen:
- DE-A- 19 623 138
- DE-C- 19 540 059
- FR-A- 1 597 418
- GB-A- 919 483
- US-A- 3 759 599

## Beschreibung

Die Erfindung betrifft Nachtschränkchen, die in stationären und mobilen Sanitätsstationen, insbesondere in Krankenhäusern, Heimen, häuslicher Pflege, Kriegslazaretten, Sanitätszelten und mobiler Katastrophenhilfe eingesetzt werden und ein Verfahren zu deren Herstellung.

Nachtschränkchen für Krankenhäuser, Pflegeheime, Sanitäts- oder Erste-Hilfe-Stationen weisen gegenüber herkömmlichen Nachtschränkchen Einrichtungen auf, die auf den Medicinal-Bereich abgestimmt sind. Aus der DE 39 32 036 C1 und der DE U 91 07 787 sind fahrbare Nachttische mit doppelseitiger Funktion, d.h. zwei mit Türen ausgestatteten gegenüberliegenden Seiten bekannt die außerdem eine ausziehbare Tischplatte aufweisen, die schwenkbar und höhenverstellbar ist.
Zusätzlich sollen die Schränkchen samt ihren Einrichtungen hohe Anforderungen an die Robustheit und die Hygiene erfüllen.
Die Vielzahl an Einrichtungen bedingt eine komplexe Montage, die nur von Fachpersonal ausgeführt werden kann. Die Hersteller fertigen deshalb bevorzugt starre Hohlkörpereinheiten zum Vertrieb. Dabei wird ein hoher Platzbedarf beim Lagern und Transport in Kauf genommen. Außerdem sind die im wesentlichen als Hohlkörper ausgebildeten Schränkchen naturgemäß druckempfindlich d.h. kaum belastbar bzw. wenig stapelbar. Diese Schränkchen haben deshalb hohe Lager- und Transportkosten. Dies steht einem schnellen Einsatz wie es in Katastrophengebieten wünschenswert ist, entgegen.
Diese Nachteile können teilweise durch einen Bausatz überwunden werden, wie er nach DE U 94 18 630 erhältlich ist. Die Montage solcher Schränkchen ist insbesondere wegen der vielen Funktionen kompliziert und erfordert deshalb Fachpersonal und Zeit. Beide Erfordernisse sind insbesondere bei Katastropheneinsätzen sehr unerwünscht.
Aus der DE 19 43 744 sind Transportwagen bekannt die bei Nichtgebrauch weniger Raumbedarf als im Einsatz haben. Aus den US 48 78 682 sowie US 43 26 731 sind auch Transportwagen bekannt die zusammengeklappt werden können. Diese fahrbaren Wagen sind nicht kompakt und nicht stapelbar. Dadurch daß sie zuviel Hohlräume haben, würden diese bei einem Stapelversuch einbrechen. Diese Wagen sind also für einen Transport völlig ungeeignet. Sie besitzen viele herausstehende Ecken und Kanten die bei Belastung abbrechen würden. Da nicht stabil in der Lagerung, müßten diese Wagen separat eingepackt werden, was einen erheblichen Verpackungsmaterial-Bedarf zur folge hätte. Transportwagen in Käfigform sind aus den DE 23 39 197 A1, DE 94 06 270 U1 sowie DE 83 17 461.3 bekannt. Hier handelt es sich meist um Rohroder Drahtgeflecht-Konstruktionen, die jeweils ohne Zwischenböden ausgebildet sind. Auch diese Wagen sind für einen Transport völlig ungeeignet. Sie sind nicht kompakt zusammenlegbar und nicht stapelbar. Zu viele Extremitäten verhindern ein dichtes stapeln. Es müßte alles eingepackt werden, damit unter der Belastung nichts abbricht. Wenn Sanitätsnachtschränkchen in großer Anzahl in Katastrophengebieten benötigt und dorthin transportiert werden, sollte deren Einsatz möglichst effektiv sein, d.h. schnell, zuverlässig und einfach bei minimalem Kostenaufwand. Die Sanitätsnachtschränkchen sollten daher während Transport und Lagerung wenig Platz beanspruchen und stapelbar sein.

Ein faltbarer Transportbehälter, der als Sanitätsnachtschränkchen verwendet werden kann, ist aus der Druckschrift US-A-3 759 599 bekannt.

Es ist die Aufgabe der vorliegenden Erfindung, ein voll im medizinischen Bereich einsetzbares Sanitätsnachtschränkchen bereitzustellen, daß einfach zusammenlegbar ist, wenig Transport- und Lagerraum benötigt, bei geringem Zeitaufwand in großer Menge stapelbar ist und ohne Werkzeug einfach wiederaufbaubar ist. Die Aufgabe ist durch das im Anspruch 1 definierte Sanitätsnachtschränchen gelöst.
Erfindungsgemäß wird ein ein Klapp- oder Faltsystem aufweisendes Sanitätsnachtschränkchen und ein Rad/ Radersatz-Set bereitgestellt. Der Auf- und Abbau ist sehr einfach, so daß weder Werkzeuge noch Fachleute erforderlich sind. Im aufgeklappten Zustand bietet das Nachtschränkchen alle Funktionen, die von einem solchen Möbel im medizinischen Bereich erwartet werden. Der Patient kann vom Schränkchen aus Mahlzeiten und Getränke einnehmen, darauf oder darin Bücher und/oder Zeitschriften ablegen und darin Privates und Wertsachen sicher aufbewahren. Der Pfleger kann das Schränkchen fahren, reinigen, Medikamente und Verbandmaterial abstellen, Essen und Getränke bereitstellen, die Tischplatte zum lesen neigen usw... Durch den verringerten Platzbedarf des
zusammengelegten Schränkchens gegenüber einem im wesentlichen als Hohlkörper ausgebildeten Schränkchen können die Transport- und Lagerkosten für Schränkchen enorm gesenkt werden. Durch den schnellen Auf- und Abbau ist ein Verlagern eines Einsatzortes, z.B. Manöver-Lazaretten, ohne großen Zeitaufwand möglich. Die zusammengelegten Schränkchen sind relativ massiv und deshalb gegenüber Druck belastbarer als die im wesentlichen als Hohlkörper ausgebildeten Schränkchen. Insbesondere werden Sanitätsnachtschränkchen so zusammengelegt, daß flächige Teile oder die Verstärkung von den flächigen Teilen plan aneinander anliegen. Somit sind zusammengelegte Schränkchen aufgrund geringen Volumens und erhöhter Druckbelastbarkeit besser und in größerer Stückzahl stapelbar.
In einer vorteilhaften Ausführung ist die Tischplatte eine verchromte Metallplatte insbesondere aus Leichtmetall wodurch eine zusätzliche Gewichtsreduzierung gegenüber herkömmlichen Holzplatten erreicht wird. In einer weiteren vorteilhaften Ausführung sind die Türen mit Schlössern verschließbar.
In einer dritten vorteilhaften Ausführung ist unter der Tischplatte eine schwenkbare, einstellbare anti-kipp Teleskopstange befestigt, um eine Abstützung der Tischplatte zu gewährleisten.
Die Räder sind leicht auswechselbar, um das Schränkchen an entsprechende Bodenverhältnisse im Anwendungsbereich schnell anzupassen. Zum Überwinden von Türschwellen oder auf festen Boden z.B. in Turnhallen sind Weichgummiräder vorgesehen.
Zum Einsatz im Freien, sind Hartgummiräder für steinigen Boden, und luftbereifte Räder für den morastigen, tiefen und weichen Boden vorgesehen. Für den Einsatz auf eisigem, verschneiten Boden, ist ein Kufen/Skisystem mit angebrachter Domenarretierung zum Feststellen und dadurch für den sicheren Stand des ganzen Medicinal-Nachtschränkchen vorgesehen. In einer weiteren vorteilhaften Ausführung sind nur zwei schwenkbare Räder hinten montiert, ergänzt durch zwei vordere Gummistopper In diesem Fall wird das Kästchen zum fahren vorne leicht angehoben und an der gewünschten Stelle abgelassen. An die Räder sind entweder Anschraubplatten oder Gewindestifte montiert. So sind sie durch einfaches Verschrauben der Anschraubplatten oder Schnappen der Gewindestifte leicht austauschbar. Vorzugsweise sind sie auch höhenverstellbar. Es ist ein Einrastvorgang oder Einrastsystem vorgesehen oder ein Feststellsystem, z.B. Festschrauben einer Stange in die die Halterung der Räder, Kufen/Ski-, Stopper eingreift. Es ist weiterhin vorgesehen Räder mit geschraubten Radachsen zu verwenden, um zu einem späteren Zeitpunkt den Radkörper (Lauffläche) auswechseln zu können. Hier kommen speziell Rollen mit Fadenschutz zum Einsatz, die ein Verschmutzen der Radachsen verhindern. Sämtliche Teile bestehen aus leicht desinfizierbaren Material. Metallteile sind korrosionsbeständig oder korrosionsgeschützt.

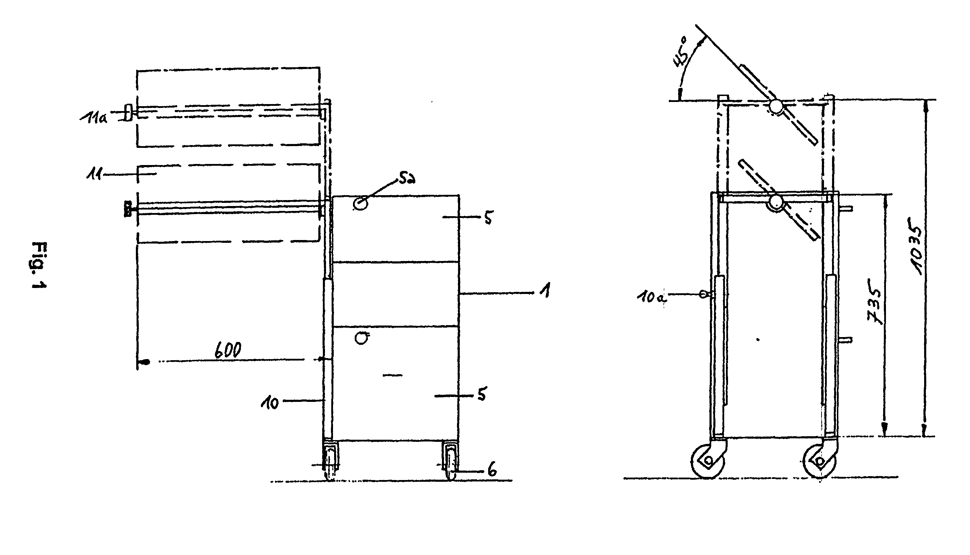

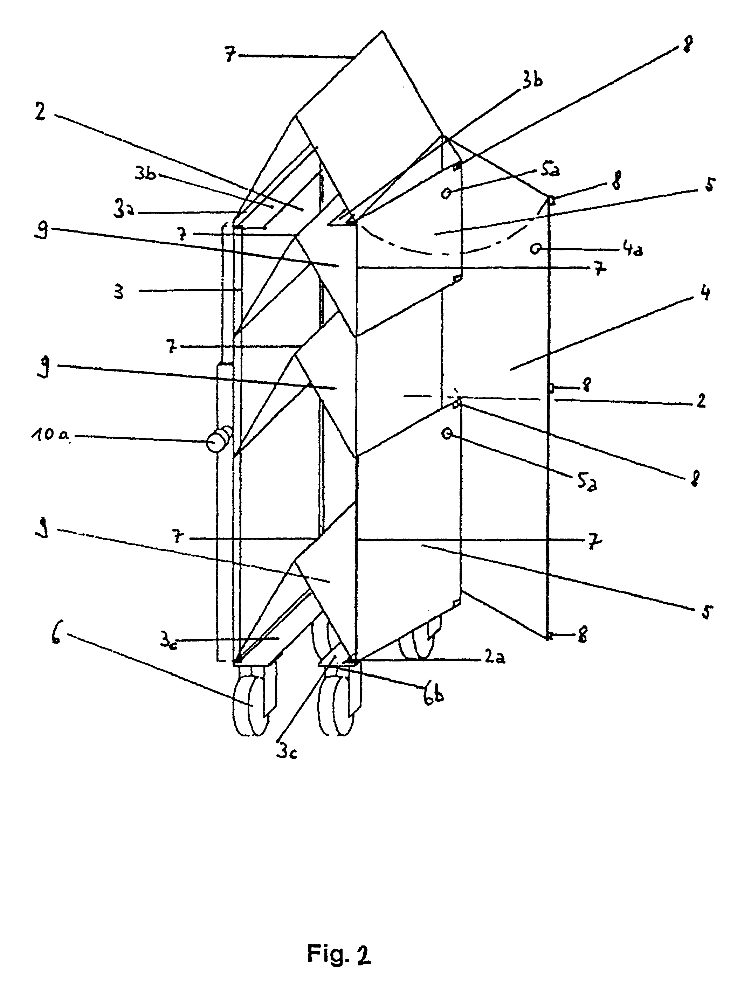

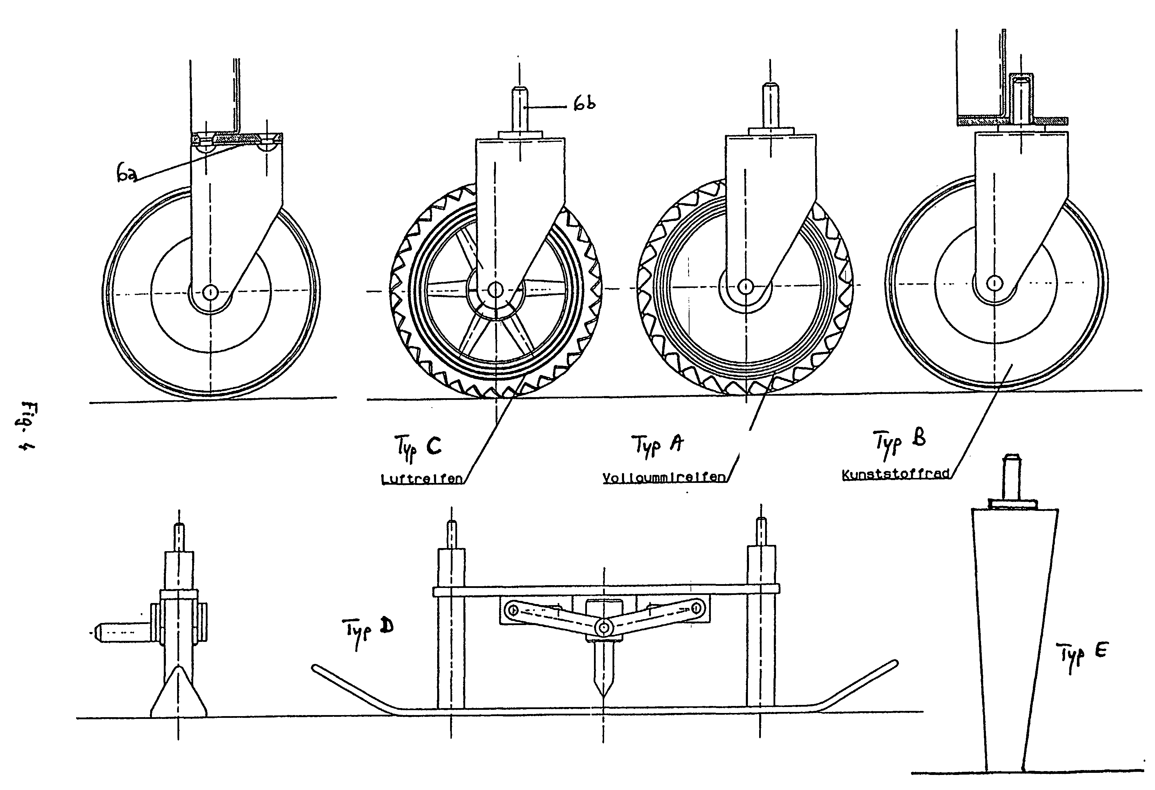

Im folgenden wird die Erfindung anhand von Beispielen mit Bezug auf die beiliegenden Zeichnungen näher erläutert, wobei
Fig. 1 das aufgebaute Schränkchen mit ausgeklappter Tischplatte,
Fig. 2 das Schränkchen mit zurückgeschwenkten Türen und Rückwand, sowie eingeknickten Gelenkböden,
Fig. 3 das Schränkchen von hinten,
Fig. 4 die verschiedenen Radarten und Radersatz-Systeme, und

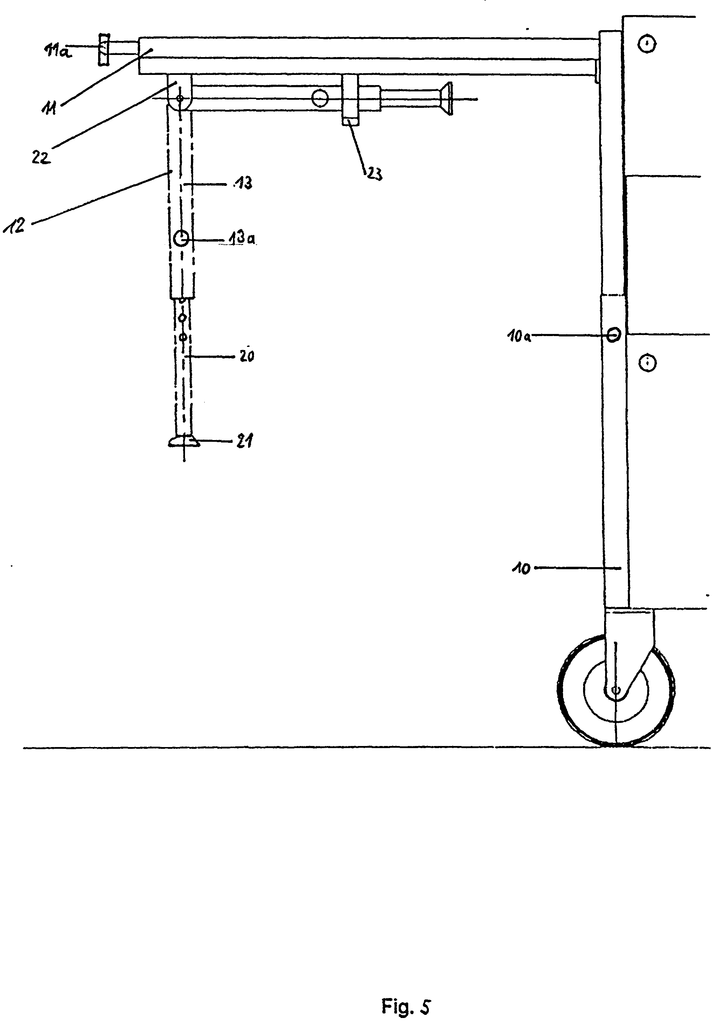

Fig. 5 die anti-kipp Teleskopstange unter der Tischplatte zeigt, und
Fig. 6, 7, 8 die vorteilhafte Ausführung des Schränkchens als Konstruktion die sich beim verschieben als Parallelogramm zusammenfalten läßt.
Ein Schränkchen nach Fig. 1 bis 3 hat zwei Seitenwände (2), die an ihrem oberen und unteren Rand als Auflagefläche (3a) umgebogen sind. Eine der Seitenwände (2) ist an ihrer Längsseite als Anschlagfläche (3) für die Türen (5) und Rückwand (4) umgebogen. Die Rückwand (4) sowie Türen (5) sind jeweils nach außen schwenkbar und vertikal mit Scharnieren (7) an einer Seitenwand befestigt. An der Innenseite der Rückwand (4) und der Türen (5) sind am Rand kleine Magnete (8) angebracht, um an der Anschlagfläche (3) festzuhalten. In zusammengelegter Position zeigen die kleinen Magnete (8) der Rückwand (4) nach außen und halten daran angelegte oder gestapelte weitere Sanitätsnachtschränkchen gleicher Bauart an den Profilschienen (10). Ausgestanzte Löcher (4a) in der Rückwand (4) und (5a) in den Türen (5) sind als Griffe zum Schwenken der Rückwand (4) und Türen (5) ausgebildet.
Mittig durch Scharniere (7) geteilte Gelenkböden (9) sind horizontal mit den Seitenwänden (2) durch Scharniere (7) verbunden. Die Gelenkböden (9) sind mit einer vertikalen Verbindungsstange (16) verbunden, die für eine gleichmäßige Stellung der Böden (9) sorgt Die Verbindungsstange (16) weist kleine Magnete (8) an ihrer Außenseite auf. Diese Magnete (8) dienen einerseits im aufgestellten Zustand dazu, die Rückwand (4) zu halten und anderseits in der zusammengeklappten Stellung dazu, zwei nebeneinander spiegelbildlich gestapelte Schränkchen aneinander zu befestigen. Am unteren Rand der Seiten (2) ist je eine horizontale Fixierungsplatte (3c) befestigt, an die je zwei schwenkbare Räder (6) mit Anschraubplatte (6b) montiert sind und ein leichtes, schnelles Austauschen von Rädern oder Radersatz, für die jeweiligen Bodenverhältnisse am Einsatzort ermöglicht.
Nach Fig. 4 weisen die Räder des Typs A Kunststoffelgen-Gleitlager und Vollgummi-Laufflächen auf. Diese Räder sind zum Überwinden von Türschwellen oder für festen Boden geeignet z.B. in Turnhallen. Zwei der Rollen sind mit Feststellern versehen. Für den Einsatz im Freien, sind Hartgummiräder des Typs B für den steinigen, felsigen Boden, und luftbereifte Räder des Typs C für den morastigen tiefen Boden vorgesehen. Für den Einsatz auf eisigem, verschneiten Boden, ist das Kufen/Skisystem des Typs D mit angebrachter Dornenarretierung zum Feststellen für den sicheren Stand des Medicinal-Nachschränkchen vorgesehen. In einer weiteren Ausführungsform sind zwei der schwenkbaren Räder (6) durch Gummistopper des Typs E ersetzt. Durch Ankippen des Schränkchens kann dieses gefahren werden und standfest wieder abgestellt werden.

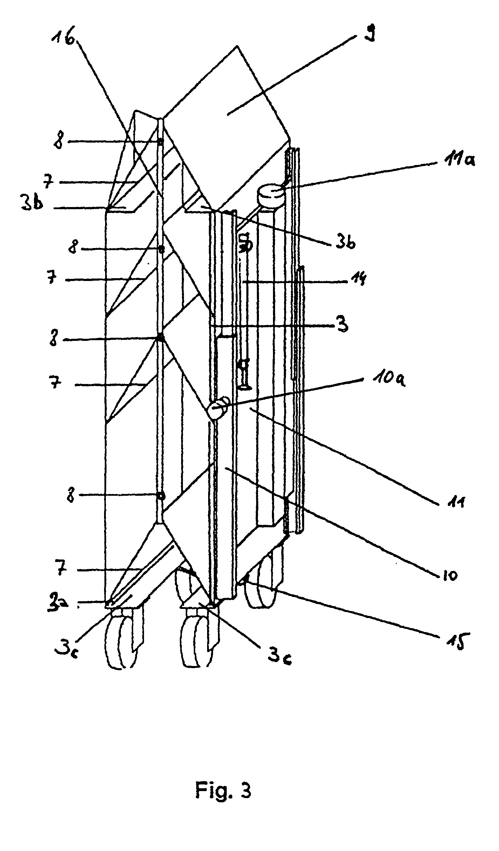

Am obersten Innenrand der Seiten (2) ist je eine Fixierungsplatte (3b) befestigt. Im zusammengeklappten Zustand des Schränkchens stoßen die Fixierplatten (3b) und (3c) jeweils gegeneinander um die gefaltete Konstruktion zu stabilisieren, so daß viele Schränkchen übereinander stapelbar sind.
Die Türen (5) und die Rückwand (4) weisen innenseitig kleine Magnete (8) auf und sind mittels der Scharniere (7) um 270° nach außen schwenkbar. Beim Schwenken um 270° liegen sie jeweils parallel an der Seitenwand (2) an und haben Kontakt mit den kleinen Magneten (8). Nach Fig. 3 und 4 stehen die Rückwand (4) sowie die Vordertüren auf der Fixierungsplatte (3c) auf.

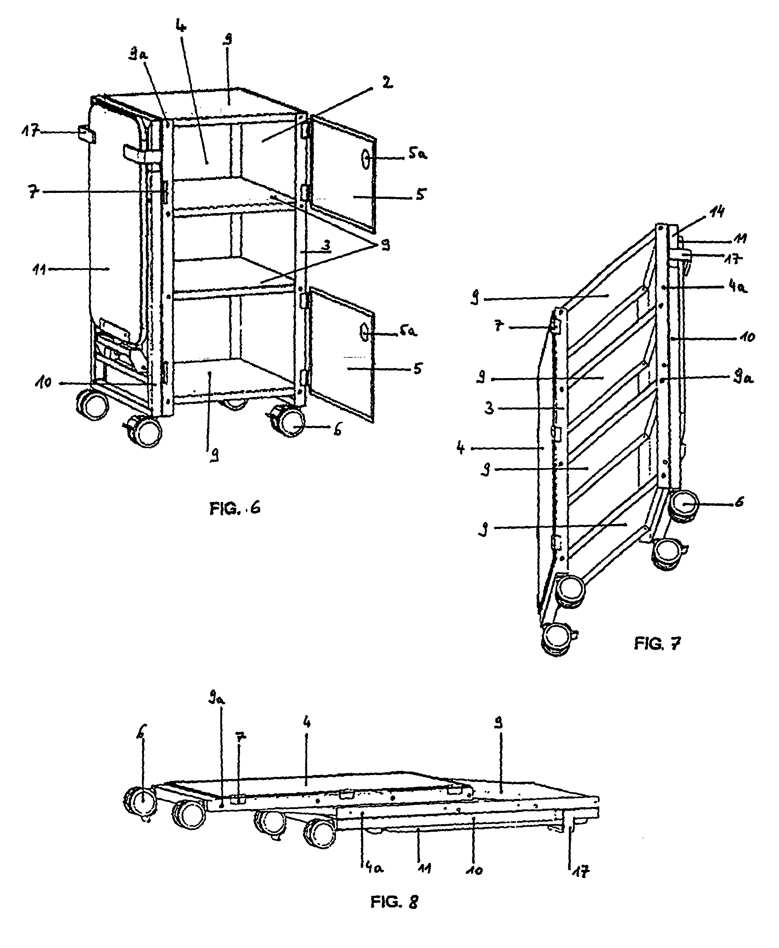

An einer Seitenwand (2) sind zwei Profilschienen (10) zur Führung der Tischplatte (11) befestigt. An der Profilschiene (10) sind Federbeaufschlagte Indexstifte (10a) befestigt, die zusammen mit unter der Tischplatte (11) angebrachten Lochleisten für die Höhenverstellung vorgesehen sind. Die Tischplatte ist im Neigungswinkel nach Wunsch durch Feststellen des Schraubknopfes (11a) einstellbar. Unter der Tischplatte (11) ist eine ausklappbare, längenverstellbare und feststellbare anti-kipp Teleskopstange (12) angebracht. Die Teleskopstange (12) ist so einstellbar, daß sie eine feste Stütze bei horizontaler Stellung der Tischplatte (11) bildet. Ein ungewolltes Kippen des Schränkchens bei schwerer Belastung am Tischplattenrand wird so verhindert. Die Teleskopstange (12) besteht aus einem Außenrohr (13) an dem ein Federdruckknopf (13a) angebracht ist und einem gelochten Innenrohr (20).Am Ende des Innenrohrs (20) befindet sich ein Fuß (21), der eine breite Auflagefläche für ein Aufstellen auf dem Boden oder der Matratze aufweist.
Die Teleskopstange (12) ist unter der Tischplatte (11) mittels Gelenk (22) fest montiert und wird zur Arretierung in die Halteklammer (23) eingerastet.
Ein fahrbares, parallelogrammartig zusammenfaltbares Nachtschränkchen (1) nach Fig. 6-8, kann mit folgenden Teilen hergestellt werden:
- zwei rechteckige Metallplatten aus denen zwei Ecken in der Breite der vorgesehenen Anschlagflächen (3) ausgestanzt sind als Seitenwände (2).
- eine längliche, rechteckige Metallplatte mit zur Verstärkung umgebogenen Rändern als Rückwand (4)
- zwei rechteckige Metallplatten mit zur Verstärkung umgebogenen Rändern als Türen (5) mit ausgesnzten Grifflöchern (5a)
- Scharniere (7) zur Verbindung der Türen (5) und Rückwand (4) mit der Seitenwand (2)
- Flügelschrauben (4b) zur Fixierung der Rückwand (4) an der zweiten Seitenwand (2)
- Muttern als Gegenstück zu den Flügelschrauben (4a)
- Vier luftbereifte Steckräder (6) oder Lenkrollen 75 mm hoch, wovon zwei feststellbar sind
- Vier Gelenkböden mit ringsum zur Verstärkung senkrecht nach unten gebogenen Kanten
- Magnete (8) die die Türen (5) im geschlossenen Zustand halten
- 16 Gelenknieten (9a) zum beweglichen Fixieren der Gelenkböden (9) an den Anschlagflächen (3) der Seitenwände (2)
- Vier Steckhülsen zur Aufnahme der Steckräder (6)
- Zwei Profilschienen (10) zur Aufnahme der Führungsstäbe (14) der Tischplatte (11)
- Zwei Feststellstifte zur Arretierung der Führungsstäbe (14) in der gewünschten Höhe
- Eine Teleskopstange (12) bestehend aus einem Außenrohr (13), einem Federdruckknopf (13a), einem Innenrohr (20) und einem Fuß (21) sowie einem Gelenk (22)
- eine Halteklammer (23) zum einrasten der Teleskopstange (12)
- Zwei Handgriffe (17) zum Anbringen an die Führunssstäbe (14)
- Zwei Halterungsnasen am Ende der Tischplatte (11)
- Eine Arretierung (15) zum Sichern der zusammengelegten Konstruktion
Zwei Seitenwänden (2) werden die Längsseiten als Anschlagfläche (3) umgebogen und die zwischen diesen Anschlagflächen (3) unten überstehende Breitseite zur Innenseite als U-Profil umgebogen und mit der Seitenwand mittig punktverschweißt. Auf eine Seitenwand (2) werden zwei Profilschienen (10) an den äußeren Längskanten angebracht. Als unterer Abschluß der Profilschienen (10) wird bündig mit der Unterkante dieser Seitenwand (2) ein U-Profil angebracht. In diesen als U-Profil ausgebildeten Abschlußkanten werden Steckhülsen für Steckbolsen der leicht auswechselbaren Räder (6) eingebracht. Vier Gelenkböden (9) werden mit senkrecht nach unten zeigenden Kantenflächen waagerecht zwischen den Seitenwänden (2) mit je 4 Gelenknieten (9a) schwenkbar an die Anschlagflächen(3) montiert. Der Abstand der Gelenkböden (9) zu den Seitenwänden (2) ist so bemessen, daß eine Verschiebung der Seitenwände (2) nach oben, ohne daß die Kantenflächen an der Seitenwand (2) anstoßen, nur auf einer Seite möglich ist. Eine Bewegung auf der anderen Seite nach oben, ist durch das Anstoßen der Kantenfläche an der Seitenwand (2) gehemmt. Ein Gelenkboden (9) wird so montiert, daß er mit den oberen Kanten des Schränkchens (1) abschließt. Der zweite Boden (9) ist ca. 25 cm weiter unten. Ein dritter Boden (9) wird etwa 20 cm weiter unter dem zweiten Boden (9) angebracht und ein 4. Boden (9) knapp über den als U-Profil ausgebildeten Abschluß-Innenkanten der Seitenwände (2) montiert. Die Fläche vor dem Ersten und Zweiten sowie vor dem Dritten und Vierten Gelenkboden(9) wird mit einer beweglichen Tür (5) verdeckt, die mit Scharnieren (7) an einer Seitenwand (2) befestigt wird. In der Anschlagfläche (3) der anderen Seitenwand (2), an welcher die Tür (5) im geschlossenen Zustand anschlägt werden je zwei Magnete (8) angebracht um die Türen zu halten. Die Türen (5) können dank ausgestanzter Löcher (5a) und den Scharnieren (7) um 270° nach außen geschwenkt werden, so daß sie flach an der Seitenwand (2) anliegen. Eine Rückwand (4 ) wird mit Scharnieren (7) an der gleichen Seitenwand (2) wie die Türen (5) montiert. Für den Sanitätsgebrauch wird die Rückwand (4) mit der Anschlagfläche (3) der zweiten Seitenwand (2) verschraubt. Zum Lagern oder transportieren kann sie, nach lösen der Flügelschrauben (4b), um 270° nach außen, flach über die bereits zurückgeschwenkten Türen (5) geschwenkt werden. In den Profilschienen (10) werden Führungsstäbe (14) der Tischplatte (11) eingeführt, die durch Feststellstifte (16) die gewünschte Tischplattenhöhe halten. Eine Teleskopstange (12) aus einem Außenrohr (13), einem Innenrohr (20) und einem Fuß (21) wird unter der Tischplatte (11) an einem Gelenk (22) montiert und kann bei Nichtgebrauch in der Halteklammer (23) eingerastet werden. An den Führungsstäben (14) werden Handgriffe (17) angebracht.
Am Ende der Tischplatte (11) werden Halterungsnasen (18) montiert.
Eine Verriegelung (15) hält im zusammengelegten Zustand beide Seitenwände zusammen.
Um das Sanitätsnachtschränkchen zu transportieren und zu lagern sind folgende Schritte vorher notwendig:
Die Tischplatte (11) des Nachtschränkchens (1) kann durch schwenken, in senkrechter Position, parallel zu den Führungsstäben zwischen den Profilschienen (10) eingeschoben werden. Die Türen (5) können um ca. 270° nach außen geschwenkt werden, bis sie auf der Außenseite der Seitenwand (2) anliegen, an der sie mit den Scharnieren (7) gehalten sind. Durch lösen der Flügelschrauben (4b) aus den angeschweißten Muttern (4b), kann die Rückwand (4) geöffnet werden. Die Flügelschrauben (4a) können danach wieder eingeschraubt werden. Die Rückwand (4) kann um ca. 270° nach außen geschwenkt werden bis sie auf der Außenseite der Seitenwand (2), an der sie mit Scharnieren (7) befestigt ist, die bereits zurückgeklappten Türen (5) überdeckt. Die so offene Konstruktion kann zum Falten nach hinten auf den Boden gelegt werden. Durch verschieben einer Seitenwand (2) faltet sich die ganze Konstruktion in der Art eines Parallelogramms
Die zusammengelegte Konstruktion wird mit der Verriegelung (15) in dieser Position gesichert.

## Patentansprüche

1. Sanitätsnachtschränkchen (1) mit zwei zueinander gegenüberliegend angeordneten Seitenwänden (2), mit einer Rückwand (4) und mit Böden (9), wobei die Rückwand (4) rückseitig angeordnet ist, und wobei sich die Böden (9) zumindest abschnittweise im Raum zwischen den Seitenwänden (2) und der Rückwand (4) erstrecken, und wobei die Böden (9) an beiden Seitenwänden (2) schwenkbar befestigt sind,
**dadurch gekennzeichnet, dass**
- die Böden (9) in Richtung der Seitenwände (2) schwenkbar sind,
- und dass die Rückwand (4) schwenkbar an einer Seitenwand (2) befestigt ist,
- und dass das Sanitätsnachtschränkchen (1) von einer ersten Position, in der sich die Böden (9) im rechten Winkel zu den Seitenwänden (2) und der Rückwand (4) erstrecken, durch Schwenken der Böden (9) und durch Schwenken der Rückwand (4) in eine zweite Position bringbar ist, index die Böden (9), die Seitenwände (2) und die Rückwand (4) im Wesentlichen zueinander parallel verlaufend, aufeinander flächig zur Anlage gebracht sind.

2. Sanitätsnachtschränkchen nach Anspruch 1,
**dadurch gekennzeichnet, dass** die Böden (9), die Seitenwände (2) und die Rückwand (4) zueinander parallelogrammartig zusammenfaltbar sind.

3. Sanitätsnachtschränkchen nach den Ansprüchen 1 oder 2,
**dadurch gekennzeichnet, dass** die Böden (9) durch Parallelverschiebung der Seitenwände (2) schwenkbar sind.

4. Sanitätsnachtschränkchen nach den Ansprüchen 1 oder 2,
**dadurch gekennzeichnet, dass** die Böden (9) als Gelenkböden (9) ausgebildet sind, wobei die Gelenkböden (9) aus zumindest zwei durch Scharniere (7) verbundene Bodensegmenten zusammengesetzt sind.

5. Sanitätsnachtschränkchen nach Anspruch 4,
**dadurch gekennzeichnet, dass** die Gelenkböden (9) durch Abklappen der Bodensegmente schwenkbar sind.

6. Sanitätsnachtschränkchen nach den Ansprüchen 4 oder 5,
**dadurch gekennzeichnet, dass** alle Gelenkböden (9) durch zumindest eine vertikal verlaufende Verbindungsstange (16) miteinander verbunden sind.

7. Sanitätsnachtschränkchen nach den Ansprüchen 1 bis 6,
**dadurch gekennzeichnet, dass** vorderseitig Türen (5) vorgesehen sind, wobei die Türen (5) schwenkbar an zumindest einer Seitenwand (2) befestigt sind, und wobei die Türen (5) auf dieser Seitenwand (2) parallel zur Anlage bringbar sind.

8. Sanitätsnachtschränkchen nach den Ansprüchen 1 bis 7,
**dadurch gekennzeichnet, dass** sich die Türen (5) im Wesentlichen zwischen den Seitenwänden (2) und zumindest während abschnittweise in Längsrichtung der Seitenwände (2) erstrecken können.

9. Sanitätsnachtschränkchen nach den Ansprüchen 1 bis 8,
**dadurch gekennzeichnet, dass** die Rückwand (4) bzw. die Türen (5) in einem ersten Randbereich schwenkbar mit einem Randbereich (3) einer Seitenwand (2) verbunden sind.

10. Sanitätsnachtschränkchen nach den Ansprüchen 1 bis 9,
**dadurch gekennzeichnet, dass** die Rückwand (4) bzw. die Türen (5) in einem zweiten Randbereich (25, 26) durch Magnete (8) und / oder Schrauben (4b) mit einem Randbereich (3) einer Seitenwand (2) verbunden sind.

11. Sanitätsnachtschränkchen nach den Ansprüchen 1 bis 10,
**dadurch gekennzeichnet, dass** die schwenkbare Befestigung der Rückwand (4) und / oder der Türen (5) zumindest abschnittweise durch Scharniere (7) bewerkstelligt wird.

12. Sanitätsnachtschränkchen nach den Ansprüchen 1 bis 11,
**dadurch gekennzeichnet, dass** die schwenkbaren Befestigung der Böden (9) an den Seitenwänden (2) durch Scharniere (7), insbesondere durch Gelenknieten (9a), vermittelt wird.

13. Sanitätsnachtschränkchen nach den Ansprüchen 1 bis 12,
**dadurch gekennzeichnet, dass** die Seitenwände (2) und / oder die Böden (9) und / oder die Türen (5) und / oder die Rückwand (4) im Randbereich (3, 23, 24, 25, 26) als U-Profile ausgebildet sind.

14. Sanitätsnachtschränkchen nach den Ansprüchen 1 bis 13,
**dadurch gekennzeichnet, dass** im Bereich des unteren axialen Endes der Seitenwände (2) Räder (6) und / oder Gummistopper (27) oder Kufen/Skisysteme (28) vorgesehen sind.

15. Sanitätsnachtschränkchen nach Anspruch 14,
**dadurch gekennzeichnet, dass** die Räder (6) und / oder Gummistopper (27) oder das Kufen/Skisystem (28) zumindest mittelbar im Bereich der Profilierung vorgesehen sind.

16. Sanitätsnachtschränkchen nach den Ansprüchen 15 oder 16,
**dadurch gekennzeichnet, dass** die Räder (6) und / oder Gummistopper (27) oder das Kufen/Skisystem (28) schwenkbar und / oder abnehmbar sind.

17. Sanitätsnachtschränkchen nach den Ansprüchen 15 bis 16,
**dadurch gekennzeichnet, dass** luftbereifte Räder oder Räder mit Vollgummilaufflächen oder Hartgummiräder vorgesehen sind.

18. Sanitätsnachtschränkchen nach den Ansprüchen 1 bis 17,
**dadurch gekennzeichnet, dass** im Bereich einer Seitenwand (2) eine Tischplatte (11) vorgesehen ist, die höhenverstellbar und / oder klappbar und / oder um die Längsachse drehbar ist.

19. Sanitätsnachtschränkchen nach Anspruch 18,
**dadurch gekennzeichnet, dass** an der Unterseite der Tischplatte (11) eine anti-kipp Teleskopstange (12) vorgesehen ist.

20. Sanitätsnachtschränkchen nach den Ansprüchen 1 bis 19,
**dadurch gekennzeichnet, dass** mehrere solche Sanitätsnachtschränkchen (1) in der zweiten Position aufeinander stapelbar sind.

## Claims

1. Medical bedside table (1) with two side walls (2), which are disposed opposite one another, with a rear wall (4) and with bottoms (9), wherein the rear wall (4) is disposed at the rear, and wherein the bottoms (9) extend at least in sections in the space between the side walls (2) and the rear wall (4), and wherein the bottoms (9) are pivotably fastened to both side walls (2), **characterised in that**
- the bottoms (9) can be pivoted in the direction of the side walls (2),
- and that the rear wall (4) is pivotably fastened to a side wall (2),
- and that the medical bedside table (1) can be brought from a first position, in which the bottoms (9) extend at a right angle to the side walls (2) and the rear wall (4), into a second position, in which the bottoms (9), the side walls (2) and the rear wall (4) are brought to lie flatly against one another while extending substantially parallel to one another, by pivoting the bottoms (9) and by pivoting the rear wall (4).

2. Medical bedside table according to Claim 1,
**characterised in that** the bottoms (9), the side walls (2) and the rear wall (4) can be folded together like a parallelogram.

3. Medical bedside table according to Claim 1 or 2,
**characterised in that** the bottoms (9) can be pivoted through a parallel displacement of the side walls (2).

4. Medical bedside table according to Claim 1 or 2,
**characterised in that** the bottoms (9) are formed as hinged bottoms (9), wherein the hinged bottoms (9) consist of at least two bottom segments which are connected by hinges (7).

5. Medical bedside table according to Claim 4,
**characterised in that** the hinged bottoms (9) can be pivoted by folding down the bottom segments.

6. Medical bedside table according to Claim 4 or 5,
**characterised in that** all hinged bottoms (9) are connected together by at least one vertically extending connecting rod (16).

7. Medical bedside table according to Claims 1 to 6,
**characterised in that** front doors (5) are provided, wherein the doors (5) are pivotably fastened to at least one side wall (2), and wherein the doors (5) can be brought to lie in parallel against this side wall (2).

8. Medical bedside table according to Claims 1 to 7,
**characterised in that** the doors (5) may extend substantially between the side walls (2) and at least in sections in the longitudinal direction of the side walls (2).

9. Medical bedside table according to Claims 1 to 8,
**characterised in that** the rear wall (4) or the doors (5) is/are pivotably connected in a first edge region to an edge region (3) of a side wall (2).

10. Medical bedside table according to Claims 1 to 9,
**characterised in that** the rear wall (4) or the doors (5) is/are connected in a second edge region (25, 26) by magnets (8) and/or screws (4b) to an edge region (3) of a side wall (2).

11. Medical bedside table according to Claims 1 to 10,
**characterised in that** the pivotable fastening of the rear wall (4) and/or the doors (5) is effected at least in sections by hinges (7).

12. Medical bedside table according to Claims 1 to 11,
**characterised in that** the pivotable fastening of the bottoms (9) to the side walls (2) is obtained by hinges (7), in particular by hinge-type rivets.

13. Medical bedside table according to Claims 1 to 12,
**characterised in that** the side walls (2) and/or the bottoms (9) and/or the doors (5) and/or the rear wall (4) is/are formed as (a) U-profile in the edge region (3, 23, 24, 25, 26).

14. Medical bedside table according to Claims 1 to 13,
**characterised in that** wheels (6) and/or rubber stoppers (27) or runner/ski systems (28) are provided in the region of the lower axial end of the side walls (2).

15. Medical bedside table according to Claim 14,
**characterised in that** the wheels (6) and/or rubber stoppers (27) or the runner/ski system (28) is/are provided at least indirectly in the region of the profiling.

16. Medical bedside table according to Claim 15 or 16,
**characterised in that** wheels (6) and/or rubber stoppers (27) or the runner/ski system (28) is/are pivotable and/or removable.

17. Medical bedside table according to Claims 15 to 16,
**characterised in that** pneumatic wheels or wheels with solid-rubber treads or hard rubber wheels are provided.

18. Medical bedside table according to Claims 1 to 17,
**characterised in that** a table-top (11) is provided in the region of a side wall (2), which table-top can be vertically adjusted and/or folded and or rotated about the longitudinal axis.

19. Medical bedside table according to Claim 18,
**characterised in that** an anti-tip telescopic rod (12) is provided at the underside of the table-top (11).

20. Medical bedside table according to Claim 18,
**characterised in that** a plurality of medical bedside tables of this kind can be stacked on top of one another in the second position.

## Revendications

1. Table de nuit médicale (1) comprenant deux parois latérales (2) disposées l'une à l'opposé de l'autre, une parol arrière (4) et des fonds (9), la paroi arrière (4) étant disposée en position arrière et les fonds (9) s'étendant du moins par segments, dans l'espace compris entre les parois latérales (2) et la paroi arrière (4), les fonds (9) étant fixés aux deux parois latérales (2) de façon pivotante,
**caractérisée en ce que**
les fonds (9) peuvent être rabattus en direction des parois latérales (2), la paroi arrière (4) est fixée à une paroi latérale (2) de façon pivotante, et, par pivotement des fonds (9) et par pivotement de la paroi arrière (4), la table de nuit médicale (1) peut être amenée d'une première position dans laquelle les fonds (9) s'étendent à angle droit par rapport aux parois latérales (2) et à la paroi arrière (4), à une deuxième position dans laquelle les fonds (9), les parois latérales (2) et la paroi arrière (4) sont placés en s'étendant sensiblement parallèlement entre eux, posés à plat en contact les uns sur les autres.

2. Table de nuit médicale selon la revendication 1,
**caractérisée en ce que**
les fonds (9), les parois latérales (2) et la paroi arrière (4) peuvent être repliés les uns contre les autres à la façon d'un parallélogramme.

3. Table de nuit médicale selon les revendications 1 ou 2,
**caractérisée en ce que**
les fonds (9) peuvent pivoter sous l'effet d'une translation parallèle des parois latérales (2).

4. Table de nuit médicale selon les revendications 1 ou 2,
**caractérisée en ce que**
les fonds (9) sont constitués par des fonds articulés (9), les fonds articulés (9) étant composés d'au moins deux segments de fond reliés par des charnières (7).

5. Table de nuit médicale selon la revendication 4,
**caractérisée en ce que**
les fonds articulés (9) peuvent pivoter sous l'effet du repliage des segments de fonds.

6. Table de nuit médicale selon les revendications 4 ou 5,
**caractérisée en ce que**
tous les fonds articulés (9) sont reliés entre eux par au moins une barre de liaison (16) s'étendant verticalement.

7. Table de nuit médicale selon les revendications 1 à 6.
**caractérisée en ce qu'**
il est prévu des portes côté avant (5), les portes (5) étant fixées de façon pivotante à au moins une paroi latérale (2) et les portes (5) pouvant être placées en appui parallèlement sur cette paroi latérale (2).

8. Table de nuit médicale selon les revendications 1 à 7,
**caractérisée en ce que**
les portes (5) s'étendent sensiblement entre les parois latérales (2) et peuvent s'étendre au moins pendant par segments dans la direction. longitudinale des parois latérales (2).

9. Table de nuit médicale selon les revendications 1 à 8,
**caractérisée en ce que**
dans une première région de bord, la paroi arrière (4) ou les portes (5) sont reliées de façon pivotante à une région de bord (3) d'une paroi latérale (2).

10. Table de nuit médicale selon les revendications 1 à 9,
**caractérisée en ce que**
dans une deuxième région de bord (25, 26), la paroi arriére (4) ou les portes (5) sent reliées, par des aimants (8) et/ou des vis (4b) à une région de bord (3) d'une paroi latérale (2).

11. Table de nuit médicale selon les revendications 1 à 10,
**caractérisée en ce que**
la fixation pivotante de la paroi arrière (4) et/ou des portes (5) est réalisée au moins par segments par des charnières (7).

12. Table de nuit médicale selon les revendications 1 à 11,
**caractérisée en ce que**
la fixation pivotante des fonds (9) aux parois latérales (2) est réalisée par des charnières (7), en particulier par des rivets d'articulation (9a).

13. Table de nuit médicale seldn les revendications 1 à 12,
**caractérisée en ce que**
les parois latérales (2) et/ou lets fonds (9) et/ou les portes (5) et/ou la paroi arrière (4) sont réalisés sous la forme de profilés en U dans la région de bord (3, 23, 24, 25, 26).

14. Table de nuit médicale selon les revendications 1 à 13,
**caractérisée en ce que**
dans la région de l'extrémité axiale inférieure des parois latérales (2), sont prévus des roues (6) et/ou des tampons en caoutchouc (27) ou des systèmes de potins/skis (28).

15. Table de nuit médicale selon les revendications 1 à 14.
**caractérisée en ce que**
les roues (6) et les tampons en caoutchouc (27) ou le système de patins/skis (22) sont prévus au moins indirectement dans la région du profilage.

16. Table de nuit médicale selon les revendications 15 ou 16,
**caractérisée en ce que**
les roues (6) et/ou les tampons en caoutchouc (27) ou le système de patins/skis (28) sont pivotants et/ou amovibles.

17. Table de nuit médicale selon les revendications 15 à 16,
**caractérisée en ce qu'**
il est prévu des roues à bandage pneumatique ou des roues à surface de roulement en caoutchouc plein ou des roues en caoutchouc dur.

18. Table de nuit médicale selon les revendications 1 à 17,
**caractérisée en ce que**,
dans la région d'une paroi latérale (2), est prévu un plateau de table (11) qui est réglable en hauteur et/ou basculant et/ou capable de tourner autour de l'axe longitudinal.

19. Table de nuit médicale selon la revendication 18.
**caractérisée en ce qu'**
il est prévu une tige télescopique anti-basculement (12) à la face inférieure du plateau de table (11).

20. Table de nuit médicale selon les revendications 1 à 19,
**caractérisée en ce que**
plusieurs tables de nuit médidales (1) peuvent être empilées les unes sur les autres dans la deuxième position.
